# FASCICULE DE BREVET EUROPEEN

(11) **EP 0 538 161 B1**
(45) Date de publication et mention de la délivrance du brevet: **20.12.1995**
(21) Numéro de dépôt: 92440115.1
(22) Date de dépôt: 16.10.1992
(51) Int. Cl.: A01G 3/08

(54) **Dispositif pour l'élagage des arbres**
Entastvorrichtung für Bäume
Delimbing device for trees

(30) Priorité: 16.10.1991 FR 9113154
(43) Date de publication de la demande: 21.04.1993
(73) Titulaire: Gohier, Jacques, F-62920 Gonnehem (Pas-de-Calais) (FR)
(72) Inventeur: Gohier, Jacques, F-62920 Gonnehem (Pas-de-Calais) (FR)
(74) Mandataire: Duthoit, Michel

(56) Documents cités:
- EP-A- 0 084 990
- EP-A- 0 171 610
- SOVIET INVENTIONS ILLUSTRATED Section PQ, Week 8810, 10 Mars 1988 Derwent Publications Ltd., London, GB; Class P13, AN 88-069932/10
- SOVIET INVENTIONS ILLUSTRATED Section PQ, Week E02, 24 Février 1982 Derwent Publications Ltd., London, GB; Class P13, AN A4417
- & SU-A-1327 838
- & SU-A-818 554

## Description

La présente invention est relative à un dispositif d'élagage et de taillage de formation, destiné notamment à couper les branches d'arbre d'un tronc. Elle trouvera son application dans le domaine forestier ou agricole, et notamment pour des arbres d'espèces diverses, telles que notamment des feuillus du genre peupliers, frênes, chênes, chataîgniers, merisiers, etc.

Bien que particulièrement mis au point pour l'élagage de plantation de bois, ce dispositif trouvera son application dans tous les domaines où l'élagage des arbres est nécessaire (plantation d'arbres fruitiers et agricoles, forêts, etc.).

L'élagage est une technique qui consiste à couper les branches situées le long des troncs principaux des arbres. Par opposition au bucheronnage, cette technique vise surtout la coupe des branches de faible diamètre par exemple de 2 à 20 centimètres situées le long du tronc.

Le développement des techniques nouvelles d'exploitation intensive des forêts ont conduit les exploitants à utiliser de plus en plus fréquemment cette technique d'élagage.

Pour réaliser cette opération, on connaît différents dispositifs d'une conception plus ou moins complexe. Ces dispositifs sont plus ou moins bien adaptés à une cadence élevée et à des conditions souvent difficiles.

C'est ainsi qu'on connaît des dispositifs qui comprennent un engin agricole ou forestier sur lequel est agencée une nacelle à l'intérieur de laquelle une personne coupe par des moyens classiques les branches des arbres.

L'un des principaux inconvénients de ces dispositifs réside dans leur difficulté de mise en oeuvre dans des conditions difficiles car le terrain est souvent accidenté ou inaccessible. De plus, lorsque les conditions climatiques sont mauvaises, et notamment par temps de pluie ou de neige, l'utilisation de ces dispositifs est impossible.

Par ailleurs, ces dispositifs nécessitent l'utilisation d'une main-d'oeuvre importante, un conducteur d'engin et au moins une personne dans la nacelle, ce qui accroît considérablement le coût de cette opération d'élagage.

Un autre inconvénient de ces dispositifs réside dans les conditions de travail souvent pénibles et dangereuses de la personne qui se trouve à l'intérieur de la nacelle. En effet, cette personne est soumise à l'approche délicate du conducteur d'engin et doit utiliser dans des conditions souvent précaires des outils de coupe dangereux, tout en étant exposé au risque de recevoir des branches coupées.

Il existe également un dispositif qui comprend un bâti monté articulé et orientable sur l'extrémité d'une flèche d'un engin agricole ou forestier, comme, par example, connu du document EP-A-0 084 990. Ce dispositif présente des moyens de blocage du bâti à la base du tronc et un mât d'élagage sur lequel sont montés des organes de coupe agencés de manière réglable.

Par exemple, la machine est constituée par un bâti support présentant un mât muni à son extrémité d'un ou de plusieurs outils de coupe, dans l'espace. Ces outils de coupe sont associés à des moyens de variation de leur position angulaire par rapport au bâti grâce notamment à une rotation autour d'au moins un axe sensiblement vertical et autour d'un axe sensiblement horizontal. Toutefois, un tel dispositif, en pratique pose de nombreux problèmes et notamment, il n'est pas d'un maniement aisé en milieu forestier.

Par ailleurs, il est d'une conception mécanique complexe et notamment, l'orientation de l'outil de coupe par l'intermédiaire de câbles de transmission coulissant dans une gaine est une source de grippage et de coincement préjudiciable au bon fonctionnement de celui-ci.

Il faut également noter, que ce dispositif présente des capacités limitées d'utilisation puisque son bras télescopique ne peut glisser facilement entre deux branches pour effectuer une coupe sélective ou d'ornementation.

On connaît également un dispositif qui comporte un petit chenillard caoutchouté équipé d'un compresseur et d'un tuyau flexible d'une longueur d'environ 25 mètres à l'extrémité duquel est monté un organe de coupe.

Ce dispositif, bien que permettant une cadence de fonctionnement élevée, présente l'inconvénient de ne pouvoir être utilisé que lorsque les troncs d'arbres présentent une section circulaire sans fourche et lorsque les branches sont disposés selon une répartition régulière. De plus, il n'autorise un élagage que des branches de faible section ce qui en limite considérablement les possibilités d'utilisation.

L'un des buts de la présente invention est de proposer un dispositif d'élagage et de taillage, destiné notamment à couper les branches d'un tronc d'arbre, qui permette de pallier les inconvénients des techniques actuelles en autorisant un élagage rapide, efficace et en toute sécurité quelles que soient les conditions d'utilisation.

Un autre but de la présente invention est de réduire le coût de l'opération d'élagage en proposant un dispositif totalement automatique et commandé à distance par une seule personne au sol.

Un autre but de la présente invention est de permettre une coupe des branches des arbres dans toutes les directions de l'espace sans endommager l'outil de coupe ni blesser le tronc.

Un autre but de la présente invention est de permettre une découpe sélective des branches notamment pour réaliser des coupes d'ornementation.

Selon la présente invention, le dispositif d'élagage et de taillage, destiné notamment à couper les branches d'un tronc, présente un bâti et un outil de travail. Il est caractérisé en ce que le bâti porte :
- des moyens inférieurs et des moyens supérieurs pour entourer et enserrer le tronc,
- des moyens articulés d'articulation contrôlés pour déplacer en rotation, autour du tronc, l'un et/ou les dits moyens pour entourer et pour enserrer le tronc par rapport à l'autre,
- des moyens pour déplacer en hauteur l'un des dits moyens inférieurs ou supérieurs par rapport à l'autre moyen.

Ainsi, contrairement aux dispositifs actuels, la présente invention permet d'avoir une mobilité relative des moyens de coupe et des moyens pour ceinturer le tronc. Ceci est notamment avantageux pour faciliter une coupe efficace des branches en toute sécurité quelle que soit la conformation et la dimension de celles-ci.

D'autres buts et avantages de la présente invention apparaîtront au cours de la description suivante accompagnée de dessins en annexes qui en font partie intégrante, qui n'est cependant donnée qu'à titre indicatif et qui n'a pas pour but de la limiter.

La figure 1 est une vue schématique d'ensemble qui montre un premier mode de réalisation d'un dispositif conforme à l'invention équipé d'une fraise.

La figure 2 est une vue schématique d'ensemble qui montre un autre mode de réalisation d'un dispositif conforme à l'invention équipé d'une tronçonneuse.

La figure 3 est une vue schématique d'ensemble qui montre une variante de réalisation d'un dispositif conforme à l'invention équipé d'un sécateur hydraulique.

La figure 4 est une vue schématique qui illustre l'agencement d'une fraise sur une pince.

La figure 5 est une vue schématique qui illustre l'agencement d'une tronçonneuse sur une pince.

La figure 6 est une vue schématique qui montre des moyens de limitation de coupe associés au guide d'une chaîne de la tronçonneuse en position ouverte.

La figure 7 est une vue schématique qui représente les moyens de limitation de coupe associés au guide de la chaîne d'une tronçonneuse en position escamotée.

Les figures 8 et 9 sont des vues schématiques qui illustrent une autre réalisation du dispositif conforme à l'invention.

L'invention concerne un dispositif d'élagage et de taillage de troncs d'arbre, destiné notamment à couper des branches d'arbres d'un tronc principal.

Pour simplifier la description, on repère avec les mêmes références les éléments communs aux différentes formes de réalisation du dispositif illustré.

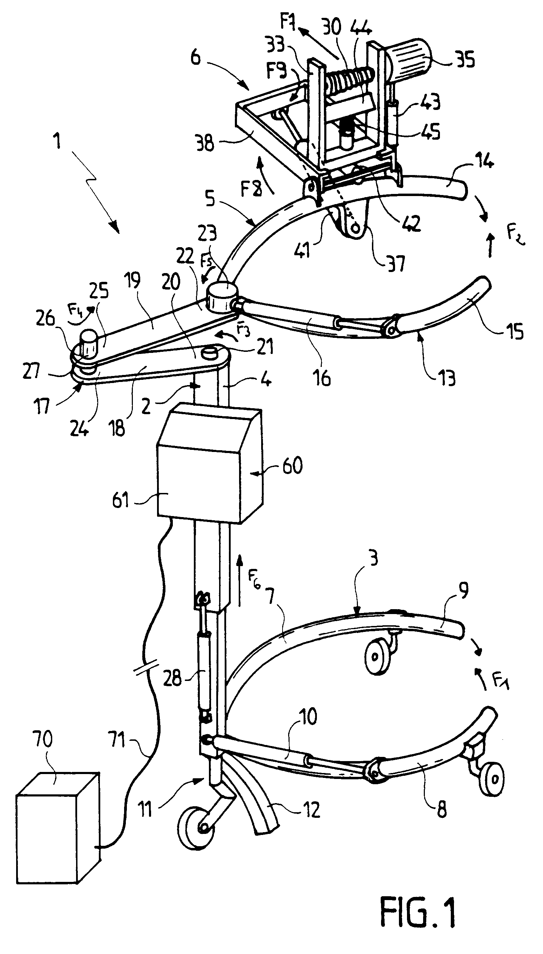

Les figures 1, 2, 3, 8 et 9 illustrent divers modes de réalisation du dispositif conforme à l'invention qui est constitué autour d'un bâti 2 et d'au moins un outil de travail. En outre, le bâti 2 peut être équipé de tout dispositif à la portée de l'Homme du Métier pour en assurer sa mobilité. Dans une variante de réalisation, il est tout à fait envisageable qu'il soit adapté pour être agencé sur un engin forestier ou agricole ou sur tout autre type de véhicule.

Dans la forme de réalisation illustrée aux figures 1, 2 et 3, le bâti 2 comporte, dans sa partie inférieure, des moyens 3 inférieurs pour entourer et enserrer la base d'un tronc d'arbre et des moyens 11 pour maintenir le dispositif en appui sur le sol, et, dans sa partie supérieure, un mât 4 télescopique à l'extrémité duquel sont montés articulés des moyens supérieurs 5 pour entourer et enserrer le tronc d'arbre et sur lequel sont agencés des moyens 6 articulés pour couper les branches.

Les moyens 3 pour entourer et enserrer la base du tronc d'arbre, tout en le bloquant, sont constitués par une pince 7 qui comporte deux bras 8, 9 articulés dont l'ouverture, illustrée par la flèche F₁, est réglable par un vérin 10 à course modulable agencé à la base du bâti 2.

Les moyens 11 pour maintenir le dispositif en appui sur le sol sont ici constitués par une béquille 12 disposée dans la partie inférieure du bâti 2. Cette béquille 12 est escamotable entre une position passive dans laquelle elle est descendue pour maintenir le dispositif en appui sur le tronc et, une position relevée active autorisant le déplacement du dispositif tout en le maintenant en équilibre sur le sol.

Les moyens 5 supérieurs pour entourer et enserrer le tronc d'arbre sont constitués par une pince 13 qui comporte deux bras 14, 15 articulés dont l'ouverture, illustrée par la flèche F₂, est réglable par un vérin 16, à course modulable.

Une telle disposition permet d'assurer, en position de fonctionnement, un maintien efficace du dispositif d'élagage contre l'arbre à élaguer, ainsi qu'une coupe en toute sécurité des branches qui sont, en outre, maintenues par l'intermédiaire de la pince 13.

Avantageusement, ce dispositif permet d'élaguer des troncs d'arbres dont le diamètre est variable par simple modification de la course des vérins 10 et 16. Leur fonctionnement peut être autorisé après qu'ils aient été dégoupillés d'une position de sécurité dans laquelle ils se trouvent lorsque le dispositif n'est pas état de marche.

La pince 13 est assujettie à l'extrémité supérieure du mât télescopique 4, par des moyens d'articulation contrôlés, dans l'espace, pour déplacer en rotation autour du tronc l'un des moyens 3, 5 par rapport à l'autre. Ces moyens sont constitués ici par un compas 17 qui comporte deux leviers 18 et 19.

L'extrémité 20 du levier 18 est assujettie à l'extrémité supérieure du bâti 4 par une articulation 21 autorisant un mouvement de rotation du dit levier 18 dans un plan horizontal comme montré par la flèche F₃. L'extrémité 22 du levier 19 est assujettie à la pince 13 par une articulation 23 autorisant un mouvement de rotation illustré par la flèche F₄ du dit levier 19 dans un plan horizontal.

L'extrémité 24 du levier 18 et l'extrémité 25 du levier 19 sont assujetties entre elles par un organe d'articulation 26 autorisant un mouvement relatif de rotation, illustré par la flèche F₅, dans un plan horizontal de l'un des leviers par rapport à l'autre.

Un organe moteur 27 hydraulique, associé à des vérins, permettent d'assurer le déplacement synchronisé des leviers 18 et 19. Ainsi, la pince 13 peut tourner autour du tronc en s'adaptant facilement à sa morphologie externe, sensiblement coaxialement à celui-ci.

Le bâti comporte des moyens pour déplacer en hauteur l'un des moyens 3, 5 qui se présentent notamment sous la forme du mât télescopique 4 équipé d'un vérin 28 dont la course est réglable comme illustré par la flèche F₆.

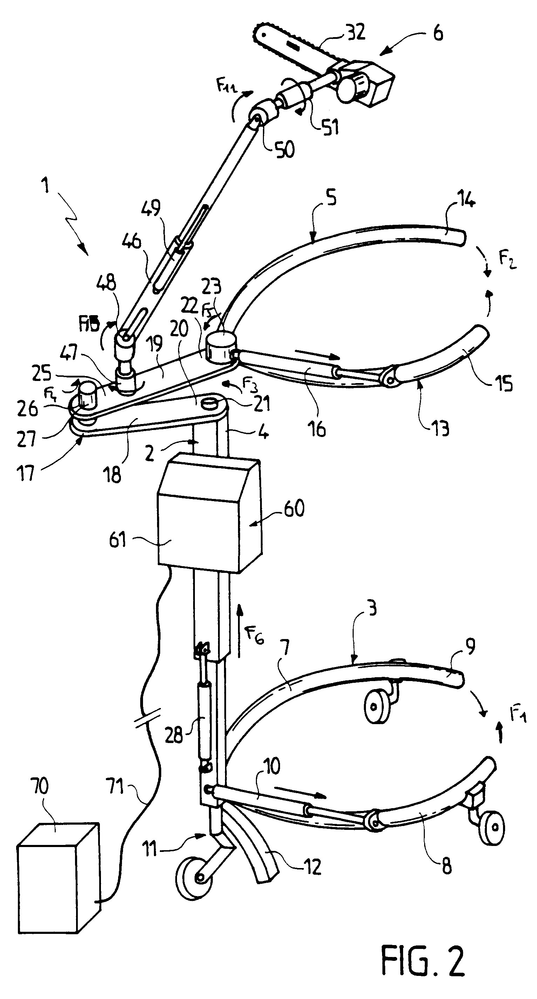

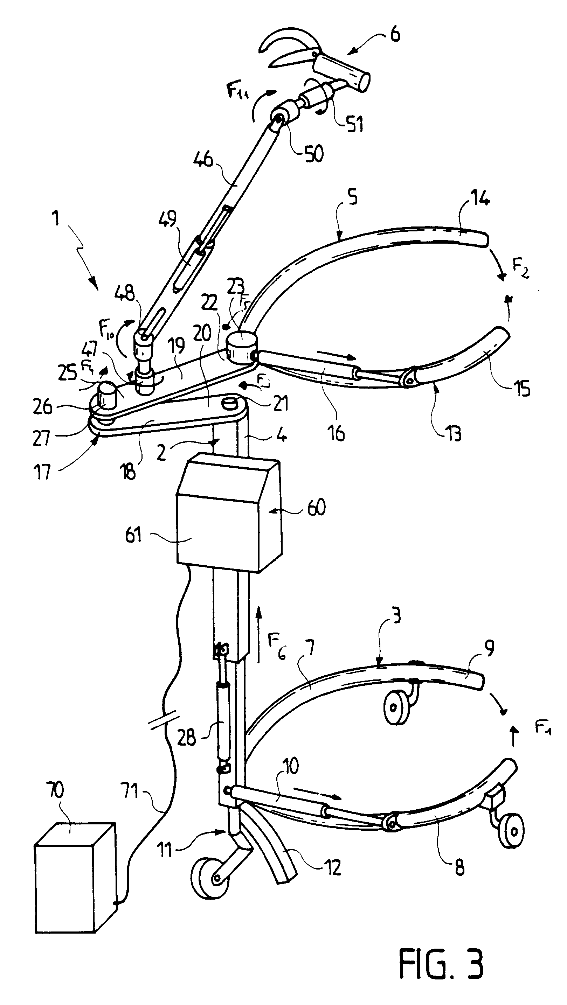

Sur la pince 13, est fixé un outil de travail qui, dans le mode de réalisation représenté à la figure 1, est constitué par des moyens de coupe 6, tels qu'une fraise 30. Bien entendu, il est tout à fait envisageable d'avoir recours, dans des variantes de réalisation, à tout autre type de moyens de coupe 6 appropriés tels que par exemple un sécateur hydraulique 31, tel que représenté à la figure 3, une scie ou bien encore une tronçonneuse 32 telle qu'illustrée à la figure 2.

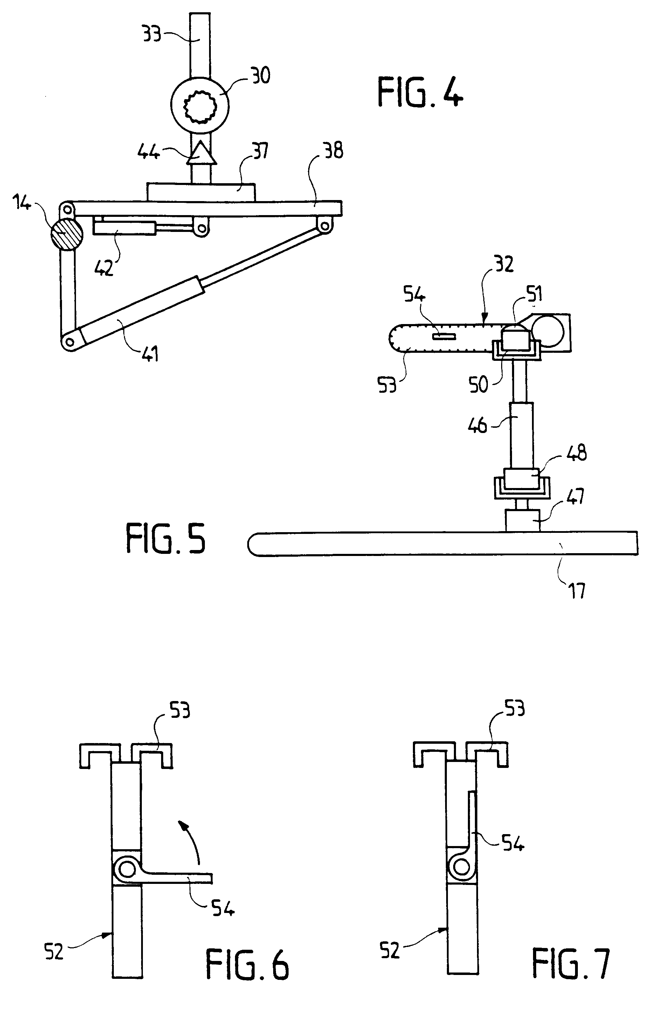

En se référant à la figure 4, on voit que la fraise 30 est portée par un support 33 sur lequel sont agencés des moyens d'entraînement 34 constitués par un moteur hydraulique ou électrique 35.

Le support 33 est assujetti au bras 14 de la pince 13 disposée en regard du bras 15 sur lequel est fixé le vérin 16. Cette disposition permet de protéger le vérin 16 contre la chute des branches coupées susceptible de l'endommager. De plus, cette disposition utilise une meilleure répartition des charges permettant une stabilisation plus adaptée du dispositif 1.

Le support 33 est animé d'un mouvement de déplacement relatif par un chariot 37 coulissant sur un châssis 38, en translation horizontale, comme illustrée par la flèche F₇, au moyen d'un vérin 42.

Le châssis 38 est lui-même animé d'un mouvement de rotation, dans le sens de la flèche F₈, par rapport à la pince 13 par un vérin 41 pour couper les branches inclinées par rapport au tronc principal.

La fraise 30 est animée par le moteur 35 d'un mouvement de coupe dans le sens de la flèche F₉ par l'intermédiaire du vérin 43.

Un coin 44 est solidaire de la fraise 30, pour éviter le coincement de l'outil lors du travail. Ce coin 44 présente une largeur sensiblement identique à celle de la fraise 30 et une épaisseur correspondant au diamètre de la fraise 30. Sur ce coin 44 est assujetti un organe élastique 45 tel qu'un ressort.

Au cours du déplacement de la fraise 30, pour couper la branche, le coin 44 suit le mouvement de la fraise au moyen du ressort 45 qui s'allonge. Cette élongation du ressort 45 permet au coin 44 de maintenir la branche sous l'action de son poids dans une position dans laquelle elle ne peut s'abaisser, ce qui permet d'éviter qu'au cours de la coupe de la branche sous l'action de son poids, la fraise 30 ne se bloque et ne termine pas la coupe.

Le coin 44, sous l'action de la force de rappel élastique du ressort 45, se libère de la branche lorsque celle-ci est coupée et qu'elle tombe.

En se rapportant à la figure 5, on voit l'agencement d'un moyen de coupe 6 tel qu'une tronçonneuse à chaîne 32 sur le dispositif 1.

La tronçonneuse 32 est assujettie sur la branche 19 du compas 17 de la pince 13 à l'extrémité d'un bras télescopique 46 monté mobile en rotation comme illustré par la flèche F₁₀ au moyen de deux vérins rotatifs 47 et 48 dont les axes de rotation sont perpendiculaires.

Le bras télescopique est également monté mobile en translation au moyen d'un vérin linéaire 49 pour permettre sa mise en position à une hauteur déterminée.

L'agencement du bras 46 à l'extrémité du levier 19 permet d'éviter notamment que les branches coupées au cours de leur chute n'endommagent le compas 17.

Pour couper les branches dans différentes positions de l'espace, la tronçonneuse 32 est montée mobile en rotation, dans le sens de la flèche F₁₁, par deux vérins rotatifs 50, 51 dont les axes de rotation sont perpendiculaires.

Lorsque les moyens de coupe 6 sont constitués par une tronçonneuse 32, le guide de la chaîne 53 comporte un papillon 54 escamotable entre deux positions, représentées aux figures 6 et 7 pour permettre une coupe de la branche par dessous et limiter la profondeur de coupe à quelques centimètres. Cette limitation de la profondeur de coupe évite ainsi que sous l'action du poids de la branche, la chaîne de la tronçonneuse ne se bloque et ne termine pas la coupe.

Pour cela, on réalise tout d'abord une entaille par dessous de la branche au moyen de la chaîne, le papillon 54 étant alors dans la position représentée à la figure 6. Puis ensuite au moyen du vérin d'orientation 50 et du vérin de manoeuvre 51 de la tronçonneuse, on effectue la coupe de la branche de haut en bas, de sorte que sous l'action du mouvement de haut en bas du guide de chaîne 53 de la tronçonneuse 32, le papillon 54 est escamoté comme illustré à la figure 7.

Selon l'invention, l'agencement des moyens de coupe 6 tel qu'un sécateur hydraulique 31 est identique à celui de la tronçonneuse 32.

De ce fait, il est facile de réaliser rapidement un changement de moyens de coupe 6 en fonction de besoins, ce qui accroit les possibilités d'utilisation de dispositifs 1.

Quels que soient les moyens de coupe utilisés, des moyens de régularisation de la coupe et des moyens de sécurité et de protection d'un type classique sont agencés pour assurer un fonctionnement optimal de ces moyens de coupe 6.

Dans la forme de réalisation qui est représentée, le dispositif 1 est automoteur et comporte des moyens 60 de contrôle, de régulation, de synchronisation de son fonctionnement et de son déplacement qui peuvent être commandés à distance par des moyens de commande 70, à partir du sol par exemple.

Les dits moyens 60 sont prévus au niveau du bâti 4 dans un boîtier 61. Ils comprennent des organes d'un type classique et connu qui autorise la commande des électrovannes des distributeurs hydrauliques des différents vérins linéaires ou rotatifs ainsi que des organes qui permettent une régulation et un fonctionnement synchronisé des différents moteurs électriques et des vérins électriques associés, tels qu'un automate programmable.

Les moyens 70 de commande à distance sont reliés par un câble 71 souple aux organes 60. Ces organes permettent d'assurer à partir d'un groupe électrogène situé au sol la distribution en énergie du dispositif ainsi que sa commande soit par câble, soit par télécommande de radio.

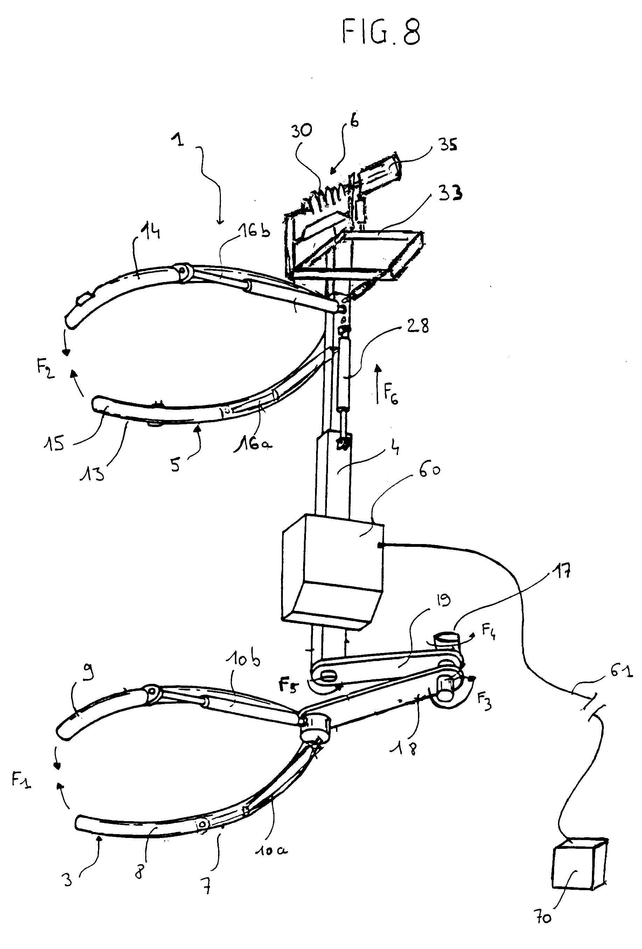

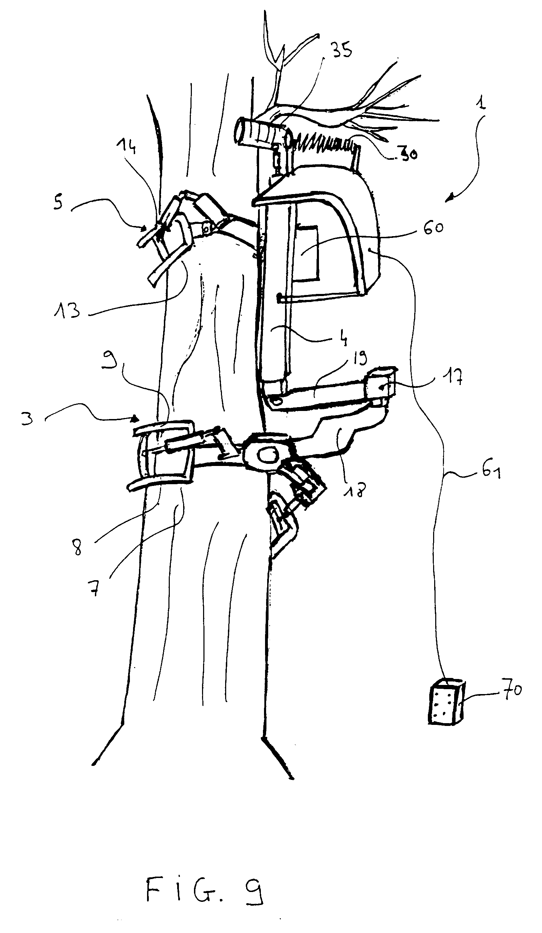

Les figures 8 et 9 illustrent une autre variante de réalisation du dispositif d'élagage 1 conforme à l'invention dans lequel le bâti 2 comporte dans sa partie inférieure des moyens 3 inférieurs pour entourer et enserrer la base d'un tronc d'arbre et, dans sa partie supérieure, à l'extrémité du mât télescopique à l'extérieur sont montés articulés des moyens supérieurs 5 pour entourer et enserrer le tronc d'arbre.

Cela étant, il est à noter que les moyens inférieurs 3 peuvent également être articulés par rapport au mât télescopique de la même manière que les moyens supérieurs 5.

Les moyens 3 pour entourer et enserrer la base du tronc d'arbre tout en le bloquant sont constitués par une pince 7 qui comporte deux bras 8, 9 articulés, dont l'ouverture illustrée par la flèche F₁, est réglable par des vérins respectivement 10a et 10b à courses modulables, disposés sur chaque bras 8 et 9 tel que décrit précédemment.

De même, les moyens 5 supérieurs pour entourer et enserrer le tronc d'arbre sont constitués par une pince 13 qui comporte deux bras 14 et 15 articulés dont l'ouverture illustrée par la flèche 2, est réglable par deux vérins 16a, 16b à course modulable disposés respectivement sur chacun des bras 14 et 15.

La pince 7 est assujettie articulée à l'extrémité inférieure du mât télescopique 4 par les moyens 17 d'articulation contrôlés pour déplacer en rotation, autour du tronc, l'un et/ou les moyens 3, 5 par rapport à l'autre. Ces moyens 17 sont constitués ici par un compas qui comporte deux leviers 18 et 19.

L'extrémité 20 du levier 18 est assujettie à l'extrémité inférieure du bâti par une articulation 21 autorisant un mouvement de rotation du dit levier 18 dans un plan horizontal comme il est montré par la flèche F₃. L'extrémité 22 du levier 19 est assujettie à la pince 7 par une articulation 23 autorisant un mouvement de rotation, illustré par la flèche F₄, du dit levier 19 dans un plan horizontal.

L'extrémité 24 du levier 18 et l'extrémité 25 du levier 19 sont assujetties entre elles par un organe d'articulation 26 autorisant un mouvement relatif de rotation, illustré par la flèche F₅, dans un plan horizontal de l'un des leviers par rapport à l'autre.

Un organe moteur hydraulique 27 associé à des vérins permet d'assurer le déplacement synchronisé des leviers 18 et 19. Ainsi, la pince 7 peut tourner autour du tronc en s'adaptant facilement à sa morphologie externe.

Dans cette forme de réalisation, le bâti 4 est également télescopique, comme illustré par la flèche F₆, et comporte des moyens pour déplacer en hauteur les dits moyens 3, 5, notamment par l'intermédiaire d'un vérin 28 dont la course est réglable.

Bien entendu, il est tout à fait envisageable, dans une variante de réalisation de concevoir un bâti 4 qui présente dans sa partie inférieure et dans sa partie supérieure un compas sur lequel sont respectivement articulés dans l'espace les moyens 3 et 5.

En outre, un outil de travail 6, qui ici est constitué par une fraise 30, est agencé sur l'extrémité supérieure du bâti 4 sur une structure support. Sur cette structure support 33 sont disposés des moyens d'entraînement 34 constitués par un moteur hydraulique ou électrique 35.

Ce dispositif 1 est également autonome et comporte des moyens 60 de contrôle et de régulation ainsi que de synchronisation de son fonctionnement et de son déplacement qui sont commandés à distance par des moyens de commande 70 identiques à ceux qui ont été décrits précédemment.

Il faut également noter, que des moyens pour éviter que la fraise ne soit endommagée au cours de la coupe de la branche sont prévus en étant associés à la fraise 30 sur le support 33 disposée à l'extrémité du mât 4.

Un dispositif 1 tel qu'illustré aux figures 1-2-3 fonctionne comme décrit ci-dessous.

Le dispositif 1 d'élagage selon l'invention se présente en regard d'une base de tronc d'arbre. Les deux bras 8 et 9, de la pince 7, sous l'action du vérin 10 s'ouvrent et entourent cette base du tronc afin de l'enserrer et de le bloquer.

Dans cette position, dès que la base du tronc est bloquée, dans la forme de réalisation illustrée aux figures 1-2-3, la béquille 12 est mise en position active c'est-à-dire descendue contre le tronc afin d'assurer un maintien du dispositif 1. Puis, le mât télescopique 4 est monté sous l'action du vérin 28 à une hauteur adaptée pour mettre la pince 13 en contact de la branche à élaguer.

En position voulue, les deux bras 14 et 15 de la pince 13, sous l'action du vérin 16, entourent le tronc pour le ceinturer.

Dès que le tronc est ceinturé, la pince 13 peut tourner par l'intermédiaire du compas 17, en fonction des besoins, autour du tronc de l'arbre, afin de placer les moyens de coupe 6 dans une position autorisant une coupe efficace et rapide de la branche. Ainsi, les moyens de coupe 6, animés d'un mouvement approprié, coupent selon une inclinaison désirée la branche dont la flexion trop brusque, lorsqu'elle est quasi-coupée, est évitée pour ne pas bloquer les dits moyens de coupe 6.

Si la branche est au delà de la course du vérin 28, on peut procéder, par préhensions successives des moyens inférieurs 3 et supérieurs 5 combinées avec l'action des moyens 28 pour les déplacer en hauteur afin de hisser le dispositif 1 à la hauteur voulue telle qu'illustrée à la figure 9.

Lorsqu'il s'agit de la variante de réalisation telle qu'illustrée aux figures 8 et 9, le dispositif 1 d'élagage fonctionne de la manière suivante.

Tout d'abord, le dispositif d'élagage 1 conforme à l'invention est placé en regard d'une base de tronc d'arbre. Les deux bras 8 et 9 de la pince 7, sous l'action respective des vérins 10a, 10b s'ouvrent puis entourent cette base du tronc afin de l'enserrer et de le bloquer.

Puis, les deux bras 14 et 15 de la pince 13, sous l'action respective des vérins 16a, 16b s'ouvrent et entourent le tronc pour l'enserrer et le bloquer.

Dès que le tronc est ceinturé, on relâche légèrement le serrage des bras 8 et 9 pour que la pince 7 puisse tourner, par l'intermédiaire du compas 17, autour du tronc de l'arbre, afin de prévoir le dispositif dans une position voulue. Ensuite, on resserre la pince 7 puis on desserre la pièce 13 et on agit sur le compas 17 pour placer l'outil en regard de la branche à couper.

Lorsque cela est nécessaire, on réalise l'opération de préhensions successives des moyens inférieurs 3 et des moyens supérieurs 5 combinées avec l'action des moyens 28, afin de positionner le dispositif 1 à la hauteur voulue et mettre l'outil de coupe, constitué par la fraise, à une hauteur appropriée permettant de couper la branche à élager.

Ainsi, les moyens de coupe 6, animés de moyens appropriés, coupent selon une inclinaison désirée la branche dont la flexion, trop brusque lorsqu'elle est quasi-coupée, est évitée pour ne pas bloquer les dits moyens de coupe 6.

Quelle que soit la forme de réalisation, pour descendre le dispositif sur le tronc de l'arbre, il suffit d'ouvrir successivement, par l'intermédiaire des vérins, les bras 8 et 9 et 14 et 15 des pinces 7 et 13 et d'agir sur le mât télescopique pour écarter ou rapprocher les pinces 7, 13 de sorte que le dispositif 1 coulisse le long du tronc de l'arbre.

Naturellement, d'autres mises en oeuvre de la présente invention, à la porté de l'Homme de l'Art pourraient être envisagées sans pour autant sortir du cadre de celle-ci.

## Revendications

1. Dispositif d'élagage et de taillage, destiné notamment à couper les branches d'un tronc, présentant un bâti (4) et un outil de travail (30, 31, 32), caractérisé en ce que le bâti (4) porte :
- des moyens inférieurs (3) et des moyens supérieurs (5) pour entourer et enserrer le tronc,
- des moyens (17) d'articulation contrôlés pour déplacer en rotation, autour du tronc, l'un et/ou les dits moyens (3, 5) pour entourer et enserrer le tronc par rapport à l'autre moyen (5, 3),
- des moyens (28) pour déplacer en hauteur l'un des dits moyens inférieurs ou supérieurs (3, 5) par rapport à l'autre moyen (5, 3).

2. Dispositif selon la revendication 1, caractérisé en ce que les moyens inférieurs (3) sont constitués par une pince (7) comportant deux bras (8, 9) articulés dont l'ouverture est réglable par un vérin (10, 10a, 10b).

3. Dispositif selon la revendication 1, caractérisé en ce que les moyens supérieurs (5) sont constitués par une pince articulée (13) comportant deux bras (14, 15) dont l'ouverture est réglable par un vérin (16, 16a, 16b).

4. Dispositif selon la revendication 1, caractérisé en ce que les moyens supérieurs (5) et/ou inférieurs (3) sont articulés sur le bâti (4) par un compas (17).

5. Dispositif selon la revendication 1, caractérisé en ce que les dits moyens pour déplacer en hauteur l'un des dits moyens inférieurs (3) ou supérieurs (5) par rapport à l'autre se présentent sous la forme d'un mât télescopique, au niveau des extrémités duquel sont prévus les dits moyens (3, 5), et assujetti à un vérin (28).

6. Dispositif selon la revendication 1, caractérisé en ce que l'outil de travail est constitué par des moyens de coupe, (6) tels qu'une fraise (30), un sécateur hydraulique (31) ou une tronçonneuse (32), associés à des moyens d'entraînement et de déplacement.

7. Dispositif selon la revendication 6, caractérisé en ce que l'outil de travail (30) est assujetti sur la pince (13) par un chariot (37) monté coulissant sur un châssis (38).

8. Dispositif selon la revendication 6, caractérisé en ce que la tronçonneuse (32) est assujettie sur le compas (17) de la pince (13) à l'extrémité d'un brin télescopique (46).

9. Dispositif selon la revendication 1, caractérisé en ce que l'outil de travail est assujettie à l'une des extrémités du bâti (4).

10. Dispositif selon la revendication 1, caractérisé en ce que l'outil de travail est équipé d'un coin (44) pour éviter le coincement de l'outil lors du travail.

## Claims

1. Pruning and cutting device, viz. for cutting the branches of a trunk, having a frame (4) and a working tool (30, 31, 32), characterized in that the frame (4) bears:
- lower means (3) and upper means (5) for surrounding and clamping
- controlled hinging means (17) for moving in rotation about the trunk one and/or said means (3, 5) for surrounding and clamping the trunk with respect to the other means (5, 3),
- means (28) for moving in height one said lower or upper means (3, 5) with respect to the other means (5, 3).

2. Device according to claim 1, characterized in that the lower means (3) are formed by a gripper (7) including two lunged arms (8, 9) the spread of which is adjustable by means of a jack (10, 10a, 10b).

3. Device according to claim 1, characterized in that the upper means (3) are formed by a hinged gripper (13) including two arms (14, 15) the spread of which is adjustable by means of a jack (16, 16a, 16b).

4. Device according to claim 1, characterized in that the upper (5) and/or lower (3) means are hinged on the frame (4) by struts (17).

5. Device according to claim 1, characterized in that said means for moving in height one said lower (3) or upper (5) means with respect to the other one are in the shape of a telescopic pole, at the level of the ends of which are provided said means (3, 5), fixed to a jack (28).

6. Device according to claim 1, characterized in that the working tool is formed by cutting means (6), such as a milling cutter (30), hydraulic pruning shears (31) or a chain saw (32), associated with driving and moving means.

7. Device according to claim 6, characterized in that the working tool is fixed to the gripper (13) by a slide (37) slidingly mounted on a frame (38).

8. Device according to claim 6, characterized in that the chain saw (32) is fixed to the struts (17) of the slide (37), at the end of a telescopique side (46).

9. Device according to claim 1, characterized in that the working tool is fixed to one end of the frame (4).

10. Device according to claim 1, characterized in that the working tool is provided with a wedge (44) in order to avoid jamming of the tool during working.

## Patentansprüche

1. Aus- und Beschneidevorrichtung, nämlich zum Abschneiden der Äste eines Stammes, die ein Gestell (4) und ein Arbeitswerkzeug (30, 31, 32) aufweist, dadurch gekennzeichnet, daß das Gestell (4):
- untere Mittel (3) und obere Mittel (5) zum Umfassen und Umschließen des Stammes,
- gesteuerte Gelenkmittel (17), um das eine und/oder die genannten, Mittel (3, 5) zum Umfassen und Umschließen des Stammes bezüglich des anderen Mittels (5, 3) in Drehung um den Stamm zu verstellen,
- Mittel (28), um das eine genannte, untere oder obere Mittel (3, 5) bezüglich des anderen Mittels (5, 3) in der Höhe zu verstellen, trägt.

2. Vorrichtung nach Anspruch 1, dadurch gekennzeichnet, daß das untere Mittel (3) aus einer Zange (7) besteht, die zwei gelenkige Arme (8, 9) umfaßt, deren Öffnungsweite mittels einer Winde (10, 10a, 10b) einstellbar ist.

3. Vorrichtung nach Anspruch 1, dadurch gekennzeichnet, daß das obere Mittel (3) aus einer gelenkigen Zange (13) besteht, die zwei Arme (14, 15) umfaßt, deren Öffnungsweite mittels einer Winde (16, 16a, 16b) einstellbar ist.

4. Vorrichtung nach Anspruch 1, dadurch gekennzeichnet, daß das obere (5) und/oder untere (3) Mittel über einen Falzarm (17) gelenkig mit dem Rahmen (4) verbunden sind.

5. Vorrichtung nach Anspruch 1, dadurch gekennzeichnet, daß die genannten Mittel, um das eine genannte, untere (3) oder obere (5) Mittel bezüglich des anderen in der Höhe zu verstellen, als ein an einer Winde (28) befestigter, teleskopischer Mast ausgestaltet sind, im Bereich dessen Enden die genannten Mittel (3, 5) vorgesehen sind.

6. Vorrichtung nach Anspruch 1, dadurch gekennzeichnet, daß das Arbeitswerkzeug aus Antrieb- und Verstellmitteln zugeordneten Schneidemitteln (6), wie einem Fräser (30), einer hydraulischen Shere (31) oder einer Schnelltrennsäge (32), besteht.

7. Vorrichtung nach Anspruch 6, dadurch gekennzeichnet, daß das Arbeitswerkzeug über einen gleitend am Rahmen (38) befestigten Schlitten (37) an der Zange (13) befestigt ist.

8. Vorrichtung nach Anspruch 6, dadurch gekennzeichnet, daß die Schnelltrennsäge (32) am Ende eines teleskopischen Trums (46) am Falzarm (17) des Schlittens (37) befestigt ist.

9. Vorrichtung nach Anspruch 1, dadurch gekennzeichnet, daß das Arbeitswerkzeug an einem Ende des Rahmens (4) befestigt ist.

10. Vorrichtung nach Anspruch 1, dadurch gekennzeichnet, daß das Arbeitswerkzeug mit einem Keil (44) versehen ist, um das Verklemmen des Werkzeugs während der Arbeit zu vermeiden.
